# EUROPÄISCHE PATENTSCHRIFT

(11) **EP 1 689 617 B1**
(45) Veröffentlichungstag und Bekanntmachung des Hinweises auf die Patenterteilung: **31.10.2007**
(21) Anmeldenummer: 04765450.4
(22) Anmeldetag: 21.09.2004
(51) Int. Cl.: B60R 13/08

(54) **VERFAHREN UND VORRICHTUNG ZUR SCHALLDÄMPFUNG UND AUFBAU HIERZU, INSBESONDERE FÜR KRAFTFAHRZEUGE**
METHOD AND DEVICE FOR SOUNDPROOFING AND DESIGN THEREFOR, ESPECIALLY FOR MOTOR VEHICLES
PROCEDE ET DISPOSITIF D'INSONORISATION ET STRUCTURE CORRESPONDANTE, NOTAMMENT POUR DES VEHICULES

(30) Priorität: 23.09.2003 DE 10344036
(43) Veröffentlichungstag der Anmeldung: 16.08.2006
(73) Patentinhaber: AKsys GmbH, 67547 Worms (DE)
(72) Erfinder: PATSOURAS, Dimitrios, 64646 Heppenheim (DE); PFAFFELHUBER, Klaus, 89312 Günzburg (DE)
(74) Vertreter: Truckenmüller, Frank
(86) Internationale Anmeldenummer: PCT/EP2004/010574
(87) Internationale Veröffentlichungsnummer: WO 2005/030532

(56) Entgegenhaltungen:
- EP-A- 1 213 187
- DE-A- 19 729 804
- DE-A- 19 939 482
- US-A- 5 462 331
- US-B1- 6 302 466
- PATENT ABSTRACTS OF JAPAN Bd. 0062, Nr. 63 (M-181), 22. Dezember 1982 (1982-12-22) & JP 57 155165 A (NISSAN JIDOSHA KK), 25. September 1982 (1982-09-25)

## Beschreibung

Die Erfindung betrifft ein Verfahren und eine Vorrichtung zur Schalldämpfung eines Schall reflektierenden und/oder Schall erzeugenden Körpers, nach den Oberbegriffen der unabhängigen Patentansprüche 1 und 7. Desweiteren betrifft die Erfindung einen entsprechenden Aufbau zur Schalldämpfung, insbesondere einen Aufbau zur Schalldämpfung des Unterbodens eines Kraftfahrzeugs nach Patentanspruch 6.

Derartige Verfahren und Vorrichtungen zur Schalldämpfung sind bekannt, wobei der schallerzeugende oder schallreflektierende Körper mit einem Abdeckformteil (z.B. Kunststoffschale) abgedeckt wird, das auf der dem Körper zugewandten Seite schalldämpfende Materialien oder Körper aufweist. Aus der DE 195 00 725 ist beispielsweise ein solcher schallabsorbierender und wärmeisolierender Formkörper bekannt, der insbesondere im Motorraum von Kraftfahrzeugen zur Anwendung kommt. Dabei wird die aus Polyester gebildete Absorber-Verbundeinheit mit einem Träger aus beispielsweise Glasmatten verstärktem thermoplastischen Material verbunden, wobei die Absorber-Verbundeinheit auf der Seite des Trägers bzw. des Abdeckformteils angebracht wird, die der Schallquelle zugewandt ist. Im Falle der Anwendung eines solchen Abdeckformteils mit Absorber-Verbundeinheit als schalldämpfende Vorrichtung zur Dämpfung des Motorraums eines Kraftfahrzeugs ist es auch bekannt, die akustische Wirksamkeit des Bauteils dadurch zu verbessern, dass der Motor abgekapselt wird, d. h., dass der Motor zum Innenraum des Fahrzeugs und zum ihm umgebenden Aussenraum abgekapselt wird. Der Motorraum wird dabei gegenüber der Karosserie abgedichtet.

Ferner ist beispielsweise aus der DE 197 05 510 A1 bekannt, bei Blechteilen von beispielsweise Kraftfahrzeugen, wie Unterbodenbleche, die nach unten weisende Aussenseite des Blechteils mit einer Beschichtung unter Verwendung von Kunststoff und Füllstoffen zu versehen, die zum Entdröhnen des Blechteils dienen. Beispielsweise wird eine Kunststofffolie auf Basis eines mit Füllstoffen versetzten Vinylpolymerisats im Extrusionsverfahren auf die Aussenseite des Blechteils, d.h. auf der dem Körper abgewandten Seite des Blechteils aufzukleben oder aufzuschmelzen.

Schalldämpfende bzw. schalldämmende Bauteile zum Einbau in Kraftfahrzeuge sind beispielsweise aus der DE 199 20 969 A1 bekannt, die zum Abteilen eines geräuschstarken Raums von einem geräuscharmen Raum, beispielsweise eines Motorraums von einem Fahrgastinnenraum eines Fahrzeugs, verwendet werden.

Es sind auch andere schallabsorbierende Formkörper bekannt (EP 131 616, DE 91 10 552 U oder DE 92 15 132 U), die zur schallabsorbierenden Isolierung des Motorraums von Kraftfahrzeugen verwendet werden. Dabei werden poröse Absorber aus offenporigen Schaumstoffen, wie Polyurethan, angewendet; dabei ist es auch bekannt (EP 0 931 309 B1), den Absorber durch eine Folie aus Kunststoff und/oder Aluminium abzudecken. Darüber hinaus ist es bekannt, den Absorber vollflächig mit einem Trägermaterial, beispielsweise der Motorkapsel, zu verbinden. Zur Verbesserung der schallabsorbierenden Wirkung befindet sich zwischen dem Trägermaterial, wie beispielsweise der Motorkapsel eines Kraftfahrzeugs und dem Folien-Schaumstoffabsorber-Verbund ein Abstand, wodurch ein Hohlraum eingeschlossen ist, so dass sich der schallabsorbierende Formkörper auf der dem Motor zugewandten Seite des Trägermaterials sowohl schallabsorbierend als auch schalldämmend verhält. Bei der Schalldämpfung handelt es sich um die Verminderung der Schallleistung bei der Ausbreitung einer Schallwelle z.B. durch einen Schalldämpfer; dabei gibt es Absorptionsschalldämpfer.

Der Erfindung liegt die Aufgabe zugrunde, eine einfache Vorrichtung und ein einfaches Verfahren zur Schalldämpfung bzw. Schallabsorption sowie einen geeigneten Aufbau hierzu mit guter schalldämpfender Wirkung zu finden, ohne dass hierfür besondere Materialien oder Herstellungstechniken notwendig sind. Derartige Materialien oder Techniken verursachen nämlich insbesondere im Fahrzeugbau und vor allem in der Serienfertigung erhebliche Kosten, die vermieden werden sollten. Desweiteren liegt der Erfindung die Aufgabe zugrunde, dass das entsprechende Verfahren bzw. die entsprechende Vorrichtung möglichst mit herkömmlichen Mitteln verwirklicht werden können, ohne dass der Herstellungsaufwand, die Kosten oder die Herstellungszeit massgeblich beeinflusst werden.

Die Erfindung ist in dem unabhängigem Patentanspruch 7 gekennzeichnet. Vorteilhafte Ausgestaltungen der Erfindung ergeben sich aus den Unteransprüchen und der Zeichnung.

Bei dem erfindungsgemässen Verfahren zur Schalldämpfung eines Schall reflektierenden bzw. Schall erzeugenden Körpers erfolgt die mindestens teilweise Abdeckung desselben durch die Anbringung eines Abdeckformteils, der entweder auf der dem Körper abgewandten Seite mit schalldämpfendem Material versehen oder zumindest teilweise durch ein solches ersetzt ist. Dabei kann das schalldämpfende Material als schalldämpfender Bauteil nach einer bevorzugten Ausführungsform der Erfindung sogar mit einem vorbestimmbaren Abstand zum Abdeckformteil auf der dem Körper abgewandten Seite des Abdeckformteils angeordnet sein. Der Abstand ist dabei für die schalldämpfende Wirkung des Verfahrens unkritisch. Wahlweise kann das schalldämpfende Bauteil aber auch am Abdeckformteil selbst befestigt sein oder das Abdeckformteil wird als Teil des schalldämpfenden Bauteils am Körper oder in dessen Nähe befestigt.

Es hat sich überraschenderweise - entgegen dem bisherigen Verständnis - gezeigt, dass die Anbringung eines schalldämpfenden Bauteils auf der dem Körper abgewandten Seite des Abdeckformteils erhebliche Verbesserungen bei der Schalldämpfung des Körpers bringt, d.h., dass die Schallausbreitung des "hinter" dem Abdeckformteils befindlichen schallreflektierenden oder schallerzeugenden Körpers durch das schalldämpfende Bauteil erheblich eingeschränkt wird. Nach dem Stand der Technik wurden dagegen die schalldämpfenden Materialien, wie PU-Schaum, Vlies oder Kammerabsorber, auf der der Schallquelle zugewandten Seite eines Abdeckformteils angebracht. Um die Schallausbreitung zu vermindern, hat es sich gemäss der vorliegenden Erfindungen in überraschender Weise gezeigt, dass die Anbringung eines schalldämpfenden Materials auf der dem Körper abgewandten Seite des Abdeckformteils erhebliche Verbesserungen gegenüber den bekannten Absorberanordnungen bringt.

Dabei kann schalldämpfendes Material oder ein entsprechendes Bauteil entweder am Abdeckformteil selbst angebracht werden, oder es wird ein schalldämpfendes Bauteil statt des Abdeckformteils am oder in der Nähe des abzudeckenden Körpers angeordnet, wobei das schalldämpfende Bauteil in diesem Falle selbst formstabile bzw. tragende Eigenschaften haben sollte, um in geeigneter Weise am oder in der Nähe des Körpers befestigt zu werden.

Nach einer bevorzugten Ausführungsform der Erfindung kapselt das Abdeckformteil zumindest teilweise den Körper ein. Für Sonderfälle werden neben dem schalldämpfenden Material erfindungsgemäß auf der dem Körper abgewandten Seite des Abdeckformteils zusätzlich auch noch auf der dem Körper zugewandten Seite des Abdeckformteils schalldämpfende Materialien oder Absorberkörper angeordnet. Dies ist beispielsweise dann vorteilhaft, wenn es sich um einen schallerzeugenden Körper, wie beispielsweise den Motorraum eines Kraftfahrzeugs handelt, da in diesem Fall eine besondere schalldämpfende Wirkung dieser "Sandwich-Bauweise oder Laminat-Bauweise" erzielt werden kann.

Nach einer weiteren bevorzugten Ausführungsform der Erfindung wird statt des Abdeckformteils ein mehrschichtiges schalldämpfendes Bauteil am Körper oder in dessen Nähe befestigt, wobei mindestens eine der Schichten des Bauteils eine schalldämpfende Wirkung hat. Ein solches schalldämpfendes Bauteil kann dann zusätzliche Schichten aufweisen, die beispielsweise gegen Hitze, die Ausbreitung von Geruch oder Nässe resistent sind.

Bei der erfindungsgemässen Vorrichtung zur Schalldämpfung eines Schall reflektierenden und/oder Schall erzeugenden Körpers werden entsprechende Maßnahmen ergriffen. So wird ein schalldämpfendes Material auf der dem Körper abgewandten Seite des Abdeckformteils angeordnet oder mindestens teilweise stattdessen verwendet. Dies kann entweder dadurch geschehen, dass ein schalldämpfendes Bauteil auf der dem Körper abgewandten Seite des Abdeckformteils mit oder ohne Abstand angeordnet ist, oder dass ein schalldämpfendes Bauteil statt des Abdeckformteils am Körper oder in dessen Nähe befestigbar ist. Falls das schalldämpfende Bauteil das Abdeckformteil zumindest teilweise ersetzt, ist es vorteilhaft, wenn das schalldämpfende Bauteil formstabile Eigenschaften aufweist, um beispielsweise am Unterboden eines Fahrzeugs befestigbar zu sein.

Mit Vorteil deckt das schalldämpfende Bauteil zumindest eine Seite des Körpers vollständig ab. Dabei kann nach einer ersten vorteilhaften Ausführungsform der vorliegenden Erfindung die gesamte Seite des Körpers zusätzlich mittels des Abdeckformteils abgedeckt sein, so dass eine Doppelschicht-Struktur entsteht, die die Seite des Körpers vollständig abdeckt. Nach einer zweiten vorteilhaften Ausführungsform kann das Abdeckformteil oder können die Abdeckformteile auch nur Teile einer Seite des Körpers abdecken, während das schalldämpfende Bauteil die gesamte Seite des Körpers überdeckt.

Beispielsweise bei der Schalldämpfung des Unterbodens eines Kraftfahrzeugs ist es bekannt, den Motorraum mit einer Motorraumkapselung aus beispielsweise glasfaserverstärktem PP abzudecken, wobei auf der Innenseite der Kunststoffplatte schallabsorbierende Materialien aufgebracht werden können. Oft sind Teile des Unterbodens eines Kraftfahrzeugs auch mit Kunststoffplatten abgedeckt, die das Kraftfahrzeug vor Steinschlag, Nässe und Salz schützen. Im Gegensatz dazu ist es bei den herkömmlichen Unterseiten von Kraftfahrzeugen unüblich, den Abgasstrang sowie den Auspuff am hinteren Ende des Fahrzeugs mit einem Abdeckformteil abzudecken. Üblicherweise wird der Abgasstrang mittels eines hitzebeständigen Materials gegenüber dem Innenraum des Fahrzeugs abgeschirmt, nicht jedoch mit einem Abdeckformteil gegenüber der Strassenseite des Fahrzeugs.

Die vorliegende Erfindung hat nun erkannt, dass sich durch die Anbringung weiterer Abdeckformteile, beispielsweise an der Abgasleitung, insbesondere aber durch die Anbringung schalldämpfender Materialien, wie beispielsweise einer Schicht aus Pentalaminat®, die Schallwerte sogar im Fahrzeug sowie in der Umgebung des Fahrzeugs erheblich reduzieren. Diese Ergebnisse wurden auch beim stehenden Fahrzeug erzielt, was darauf schliessen lässt, dass die Schallausbreitung unterhalb des Fahrzeugs durch das schalldämpfende Material gedämpft wird.

Das sich zwischen dem Unterboden eines Kraftfahrzeugs und dem Boden befindende schalldämpfende Bauteil weist mit Vorteil eine Schicht aus einem schallabsorbierenden Material auf. Als schallabsorbierendes Material kann mit Vorteil ein schalldämpfendes Vlies, wie beispielsweise ein PET-Vlies oder ein Abdeckvlies, ein PU-Schaum, eine PP-Folie oder eine Kombination aus diesen Materialien verwendet werden. Mit Vorteil ist das schalldämpfende Bauteil eine Schicht aus Pentalaminat^{®}, das aus einer fünfschichtigen Struktur besteht, die auf den Aussenseiten jeweils ein Abdeckvlies aufweist und in der Mitte einen etwa 5 mm dicken Kern aus PET-Vlies, das auf beiden Seiten mit einer Polypropylenfolie abgedeckt ist.

Der erfindungsgemässe Aufbau zur Schalldämpfung eines schallreflektierenden Körpers besteht somit aus einem Abdeckformteil und einem schalldämpfenden Bauteil auf der dem Körper abgewandten Seite des Abdeckformteils. Dabei kann das Abdeckformteil selbst Teil des schalldämpfenden Bauteils sein, soweit es dem Bauteil zur Eigenstabilität verhilft. Für die Erfindung ist es dabei nicht wesentlich, ob ein schalldämpfendes Material auf der dem Körper abgewandten Seite des Abdeckformteils aufgebracht oder statt des Abdeckformteils ein (eigenstabiles) schalldämpfendes Bauteil verwendet wird, soweit dieses zumindest eine schalldämpfende Schicht auf derjenigen Seite einer eigenstabilen Schicht aufweist, die der Schallquelle abgewandt ist.

Das schalldämpfende Bauteil ist am Abdeckformteil beispielsweise mittels eines Klebers, durch eine Verschraubung, durch U-förmige Halteclips am Rand der Formteile oder durch Schnappverbindungen befestigbar oder es werden Abdeckformteil und schalldämpfendes Bauteil mittels eines Koextrusionsverfahrens unmittelbar zusammen als Verbundwerkstoff hergestellt. Das Abdeckformteil besteht dabei mit Vorteil im wesentlichen oder vollständig aus glasfaserverstärktem Polypropylen, das mit einem schalldämpfenden Vlies oder Pentalaminat® auf der dem Körper abgewandten Seite des Formteils verbindbar ist.

Der erfindungsgemässe Aufbau verfügt nach einer weiteren Ausgestaltung der vorliegenden Erfindung auf der dem schalldämpfenden Bauteil bzw. dem schalldämpfenden Material abgewandten Seite des Abdeckformteils weitere Absorberkörper oder andere schalldämpfende und gegebenenfalls hitzebeständige Materialien, die beispielsweise zur Abdeckung bzw. zur Schalldämpfung des Motorraums eines Kraftfahrzeugs geeignet sind.

Es hat sich gezeigt, dass das schalldämpfende Material an einer beliebigen Stelle zwischen der Schallquelle und dem Boden unterhalb eines Kraftfahrzeugs angebracht werden kann. Mit Vorteil wird das schalldämpfende Material bzw. das schalldämpfende Bauteil jedoch direkt am Unterboden des Kraftfahrzeugs, beispielsweise am Abdeckformteil aus Kunststoff, befestigt und kann mittels einer weiteren Abdeckschicht aus wasserabweisenden oder schlagzähem Material versehen werden, um gegen mechanische und Witterungseinflüsse von unten geschützt zu sein. Die nachträgliche Anbringung von unten bzw. von außen ist auch ein weiterer Vorteil für Nachrüstungen von Kraftfahrzeugen, Maschinen etc.

Zwei vorteilhafte Ausgestaltungen der vorliegenden Erfindung werden anhand der beigefügten Zeichnungen näher erläutert, dabei zeigen:
- Figur 1: einen schematischen Aufbau einer Motorraumkapselung nach der vorliegenden Erfindung, und
- Figur 2: den schematischen Aufbau einer Unterbodenabdeckung eines Kraftfahrzeugs mit Abgasstrang.

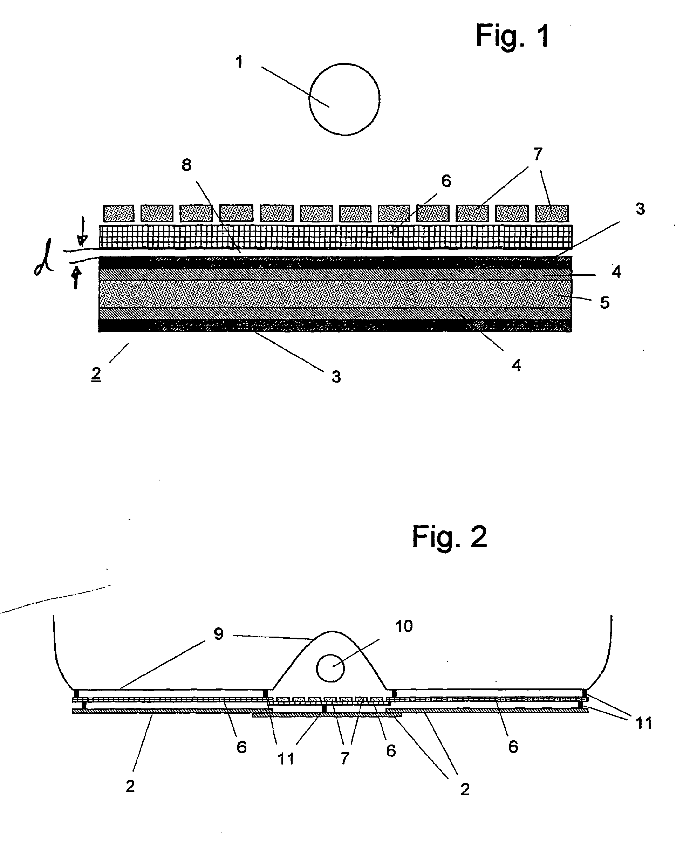

Figur 1 zeigt den schematischen Aufbau einer Motorraumkapselung nach der Erfindung, wobei ein schallerzeugender bzw. schallreflektierender Körper 1 nur schematisch dargestellt ist. Es kann sich dabei um den Motor selbst, aber auch um schwingende Teile im Motorraum oder durch den Motor beschallte und reflektierende Bauteile handeln. Der Körper 1 ist dabei durch ein Abdeckformteil 6 abgedeckt, der gegebenenfalls auf der dem Körper 1 zugewandten Seite Absorberkörper 7 oder andere schallabsorbierende oder schalldämpfende Materialien aufweist. Dies entspricht dem Stand der Technik.

Gemäss der Erfindung wird nun ein schalldämpfendes Material, beispielsweise ein schalldämpfendes Bauteil 2, auf der dem Körper 1 abgewandten Seite des Abdeckformteils 6 angeordnet. Das schalldämpfende Bauteil 2 ist dabei mit Vorteil mehrschichtig aufgebaut und wird in einem vorbestimmbaren Abstand d zum Abdeckformteil 6 befestigt, kann aber auch direkt auf das Abdeckformteil 6 aufgeklebt werden. Die Anbringung des schalldämpfenden Bauteils 2 mit Abstand d hat den Vorteil, dass eine zusätzliche Wärmedämmung sowie eine zusätzliche Schalldämmung durch den Luftraum zwischen schalldämpfenden Bauteil 2 und Abdeckformteil 6 entsteht. Je nach Anordnung des Abdeckformteils 6 kann dadurch mittels eines Masse-FederSystems zusätzlich schallgedämpft werden.

Das schalldämpfende Bauteil 2 besteht nach einer bevorzugten Ausführungsform der vorliegenden Erfindung aus Pentalaminat®. Pentalaminat ist ein 5-schichtiger Aufbau aus Abdeckvlies 3 auf beiden Seiten des Bauteils 2 sowie einem PET-Vlies 5 als Kern. Zwischen dem Kern-Vlies 5 und dem Abdeckvlies 3 befindet sich jeweils eine PP-Folie 4. Wahlweise kann statt des unteren der Strasse zugewandten Abdeckvlies 3 auch eine schlagfeste, wasserabweisende dünne Polypropylenschicht aufgetragen werden, um das schalldämpfende Bauteil 2 gegen mechanische Einflüsse zu schützen.

Figur 2 zeigt schematisch den Aufbau des Unterbodens eines Kraftfahrzeugs. Schematisch angedeutet ist dabei der Körperumriss 9 des Kraftfahrzeugs sowie die Abgasleitung 10, die beispielsweise etwa in der Mitte des Fahrzeugs vom Motorraum nach hinten verlegt ist. In herkömmlicher Weise ist der Unterboden des Kraftfahrzeugs mit Abdeckformteilen 6 abgedeckt. Nach einer bevorzugten Ausführungsform der vorliegenden Erfindung wird auch die Abgasleitung 10 mit einem Abdeckformteil 6 abgedeckt, das gegebenenfalls Absorberkörper 7 auf der der Abgasleitung 10 zugewandten Seite des Abdeckformteils 6 aufweist. Gemäss der Erfindung werden die Abdeckformteile 6 nun teilweise oder vollständig mit schalldämpfenden Bauteilen 2 abgedeckt, die mit Befestigungsmitteln 11 am Abdeckformteil 6 befestigt werden. Als Befestigungsmittel sind dabei Kleber, Schrauben, Clips, Schnappverbindungen oder andere Befestigungsarten geeignet.

Nach einer weiteren vorteilhaften Ausgestaltung der Erfindung (in Figur 2 nicht gezeigt) wird auf das Abdeckformteil 6 verzichtet und der Körperumriss 9 des Kraftfahrzeugs wird direkt mittels der schalldämpfenden Bauteile 2 abgedeckt. Diese sollten im Bereich der Abgasleitung 10 hitzebeständig sein, d.h. der in Figur 1 mehrschichtig gezeigte Aufbau des schalldämpfenden Bauteils 2 sollte an der der Abgasleitung 10 zugewandten Seite eine zusätzliche hitzebeständige Schicht aus beispielsweise Metallfolie wie Aluminium aufweisen.

Bei der in Figur 2 gezeigten Ausführungsform hat sich gezeigt, dass die Anbringung schalldämpfender Bauteile 2 an den nicht akustischen, harten und steifen Abdeckformteilen 6 erhebliche Verbesserungen bei der Schalldämpfung des Kraftfahrzeuges ergeben. Als schalldämpfendes Bauteil 2 kann Vlies mit einer Stärke von etwa 1 mm, Pentalaminat® mit einer Stärke von etwa 5 mm oder auch PU-Schaum mit einer Stärke von etwa 10 mm als schallabsorbierendes Material zum Einsatz kommen. Diese Materialien können nachträglich auf den Abdeckformteilen 6 aufgebracht werden, es ist jedoch auch die Anbringung einer Verbundplatte aus Schale (Abdeckformteil 6) und Laminat (schalldämpfendes Bauteil 2 wie beispielsweise Pentalaminat®) möglich.

## Patentansprüche

1. Vorrichtung zur Schalldämpfung eines Schall reflektierenden und/oder Schall erzeugenden Körpers (1; 10) mit einem dem Boden bzw. der Strasse zugewandten und als Unterboden eines Kraftfahrzeugs dienenden unteren Abdeckteil, insbesondere Abdeckformteil (6),
**dadurch gekennzeichnet,**
**dass** ein schalldämpfendes Material auf der dem Körper (1; 10) abgewandten Seite des als Unterboden dienenden Abdeckteils (6) oder als mindestens teilweiser Ersatz für diesen zwischen dem Unterboden des Kraftfahrzeugs und dem Boden bzw. der Strasse angeordnet ist.

2. Vorrichtung nach Anspruch 1,
**dadurch gekennzeichnet,**
**dass** als schalldämpfendes Material ein schalldämpfendes Bauteil (2) am Abdeckformteil (6) oder in einem Abstand (d) von diesem in dessen Nähe angeordnet ist.

3. Vorrichtung nach Anspruch 1
**dadurch gekennzeichnet,**
**dass** als schalldämpfendes Material ein schalldämpfendes Bauteil mindestens teilweise als Abdeckformteil (6) verwendet ist.

4. Vorrichtung nach einem der Ansprüche 2 bis 3,
**dadurch gekennzeichnet,**
**dass** das schalldämpfende Bauteil (2) zumindest eine Seite des Körpers (1) vollständig abdeckt.

5. Vorrichtung nach einem der Ansprüche 2 bis 4,
**dadurch gekennzeichnet,**
**dass** das schalldämpfende Bauteil (2) eine Schicht aus einem schallabsorbierenden Material aufweist.

6. Vorrichtung nach Anspruch 5,
**dadurch gekennzeichnet,**
**dass** als schallabsorbierendes Material ein schalldämpfendes Vlies, PU-Schaum, PP-Folie oder eine Kombination dieser Materialien verwendbar ist.

7. Vorrichtung nach einem der Ansprüche 2 bis 6,
**dadurch gekennzeichnet,**
**dass** als schalldämpfendes Bauteil (2) ein Kammerabsorber, Membranabsorber und/oder mikroperforierter Absorber verwendet ist.

8. Vorrichtung nach einem der Ansprüche 2 bis 7,
**dadurch gekennzeichnet,**
**dass** das schalldämpfende Bauteil (2) ein 5-schichtiger Aufbau ist, der ein Abdeckvlies (3) auf beiden Seiten des Bauteils (2) sowie einem PET-Vlies als Kern und jeweils eine PP- Folie (4) zwischen dem Kern-Vlies (5) und dem Abdeckvlies (3) aufweist.

9. Vorrichtung nach einem der vorhergehenden Ansprüche,
**dadurch gekennzeichnet,**
**dass** Abdeckformteil (6) als Teil des schalldämpfenden Bauteils (2) mittels Befestigungsmittel (11) am Kraftfahrzeug befestigbar ist.

10. Vorrichtung nach einem der vorhergehenden Ansprüche,
**dadurch gekennzeichnet,**
**dass** ein Abdeckformteil (6) aus glasfaserverstärktem Polypropylen mit einem schalldämpfenden Bauteil (2) aus Vlies oder aus einem 5- schichtigen Aufbau, der ein Abdeckvlies (3) auf beiden Seiten des Bauteils (2) sowie einem PET-Vlies als kern und jeweils eine PP-Folie (4) zwischen dem Kern-Vlies (5) und dem Abdeckvlies (3) aufweist, verbunden ist.

## Claims

1. Device for sound damping of a sound-reflecting and/or sound-generating body (1; 10), having a lower cover part facing the ground or road and acting as a motor vehicle floor, in particular moulded cover part (6), **characterised in that** a sound-damping material is disposed on the face, remote from the body (1; 10), of the cover part (6) acting as the vehicle floor or acting as at least partial replacement for this cover part between the floor of the motor vehicle and the ground or road.

2. Device according to claim 1, **characterised in that** as a sound-damping material a sound-damping component (2) is disposed on the moulded cover part (6) or is disposed in the vicinity thereof and at a distance (d) therefrom.

3. Device according to claim 1, **characterised in that** as a sound-damping material a sound-damping component is used at least partly as a moulded cover part (6).

4. Device according to one of claims 2 or 3, **characterised in that** the sound-damping component (2) fully covers at least one side of the body (1).

5. Device according to one of claims 2 to 4, **characterised in that** the sound-damping component (2) has a layer of a sound-absorbing material.

6. Device according to claim 5, **characterised in that** as a sound-damping material a sound-damping non-woven, PU foam, PP film, or a combination of these materials may be used.

7. Device according to one of claims 2 to 6, **characterised in that** as a sound-damping component (2) a chamber absorber, membrane absorber and/or microperforated absorber is used.

8. Device according to one of claims 2 to 7, **characterised in that** the sound-damping component (2) is a 5-ply structure, which has a covering non-woven (3) on both sides of the component (2) and a PET non-woven as a core and respectively a PP film (4) between the core non-woven (5) and the covering non-woven (3).

9. Device according to one of the preceding claims, **characterised in that** the moulded cover part (6) may be fixed to the motor vehicle as part of the sound-damping component (2) by means of fixing means (11).

10. Device according to one of the preceding claims, **characterised in that** a moulded cover part (6) composed of fibreglass-reinforced polypropylene is connected to a sound-damping component (2) composed of non-woven or of a 5-ply structure, which has a covering non-woven (3) on both sides of the component (2) and of a PET non-woven as a core and respectively a PP film (4) between the core non-woven (5) and the covering non-woven (3).

## Revendications

1. Dispositif pour amortir le son d'un corps (1 ; 10) réfléchissant un son et/ou produisant un son avec une pièce de recouvrement inférieure tournée vers le sol ou la chaussée et servant de soubassement d'un véhicule à moteur, en particulier une pièce moulée de recouvrement (6),
**caractérisé en ce**
**qu'**un matériau amortissant le son est disposé du côté opposé au corps (1 ; 10) de la pièce de recouvrement (6) servant de soubassement ou en tant que remplacement au moins partiel de celle-ci entre le soubassement du véhicule à moteur et le sol ou la chaussée.

2. Dispositif selon la revendication 1,
**caractérisé en ce**
**qu'**un composant amortissant le son (2) est disposé en tant que matériau amortissant le son sur la pièce moulée de recouvrement (6) ou à une distance (d) à proximité de celle-ci.

3. Dispositif selon la revendication 1,
**caractérisé en ce**
**que** l'on utilise comme matériau amortissant le son un composant amortissant le son (2) au moins partiellement sous forme de pièce moulée de recouvrement (6).

4. Dispositif selon l'une des revendications 2 à 3,
**caractérisé en ce**
**que** le composant amortissant le son (2) recouvre complètement au moins un côté du corps (1).

5. Dispositif selon l'une des revendications 2 à 4,
**caractérisé en ce**
**que** le composant amortissant le son (2) comporte une couche en matériau absorbant le son.

6. Dispositif selon la revendication 5,
**caractérisé en ce**
**que** l'on peut utiliser comme matériau absorbant le son un non-tissé amortissant le son, de la mousse PU, une feuille de PP ou une combinaison de ces matériaux.

7. Dispositif selon l'une des revendications 2 à 6,
**caractérisé en ce**
**que** l'on utilise comme composant amortissant le son (2) un absorbeur à chambre, un absorbeur à membrane et/ou un absorbeur microperforé.

8. Dispositif selon l'une des revendications 2 à 7,
**caractérisé en ce**
**que** le composant amortissant le son (2) est une structure à 5 couches qui comporte un non-tissé de recouvrement (3) des deux côtés du composant (2) ainsi qu'un non-tissé en PET en tant que noyau et de part et d'autre une feuille de PP (4) entre le non-tissé central (5) et le non-tissé de recouvrement (3).

9. Dispositif selon l'une des revendications précédentes,
**caractérisé en ce**
**que** la pièce moulée de recouvrement (6) peut être fixée sur le véhicule à moteur en tant que partie du composant amortissant le son (2) à l'aide de moyens de fixation (11).

10. Dispositif selon l'une des revendications précédentes,
**caractérisé en ce**
**qu'**une pièce moulée de recouvrement (6) en polypropylène chargé de fibres de verre est assemblée à un composant amortissant le son (2) en non-tissé ou en une structure à 5 couches qui comporte un non-tissé de recouvrement (3) des deux côtés du composant (2) ainsi qu'un non-tissé en PET en tant que noyau et de part et d'autre une feuille de PP (4) entre le non-tissé central (5) et le non-tissé de recouvrement (3).
